# EUROPEAN PATENT APPLICATION

(11) **EP 1 986 040 A1**
(43) Date of publication of application: **29.10.2008**
(21) Application number: 08005715.1
(22) Date of filing: 27.03.2008
(51) Int. Cl.: G02F 1/13357, C09J 7/02

(54) **Adhesive, polarizer assembly, and display device**

(30) Priority: 25.04.2007 KR 20070040265
(71) Applicant: Samsung Electronics Co., Ltd., Yeongtong-gu Suwon-city, Gyeonggi-do 442-742 (KR)
(72) Inventor: Kye, Myeong-ha, Seoul (KR); Lee, Seung-ju, Gyeonggi-do (KR); Jang, Yun, Gyeonggi-do (KR); Lee, Seung-hee, Seoul (KR); Park, Joon-hyung, Seoul (KR); Lee, Kyoung-jin, Chungcheongnam-do (KR)
(74) Representative: Dr. Weitzel & Partner

(57) **Abstract**

A liquid crystal display device includes an LCD panel, a polarizer assembly having a polarizer and a compensation film, and an adhesive layer. The adhesive layer adheres the polarizer assembly to the LCD panel and has an exfoliation force of 16 N/25mm to 28 N/25mm. The adhesive layer is formed of acryl polymer and a crosslinking agent with a respective weight ratio of 75:25 to 90:10, or about 85:15.

## Description

### BACKGROUND OF THE INVENTION

### FIELD OF THE INVENTION

This invention relates to an adhesive, a polarizer assembly and a liquid crystal display device having the same, and more particularly, to an adhesive that reduces a corner stain in a liquid crystal display panel, a polarizer assembly and a liquid crystal display device having the same.

### DISCUSSION OF THE BACKGROUND

A liquid crystal display (LCD) device displays an image using liquid crystals. The LCD device is thin and light, consumes less power and requires a low driving voltage as compared to other types of display devices. The LCD device includes an LCD panel, which displays an image thereon by adjusting transmittance of light through the liquid crystals, and a backlight assembly disposed behind the LCD panel. The backlight assembly emits light to the LCD panel for displaying an image. The backlight assembly emits unpolarized light, which vibrates in various directions.

Adjusting the transmittance of light through the liquid crystals disposed in the LCD panel is achieved by using birefringence of light. Birefringence of light refers to the property or capacity of splitting a single beam of light into two beams that are polarized at right angles to each other. Thus, the LCD panel receives polarized light to display an image. Accordingly, the LCD device further includes a polarizer assembly, which converts unpolarized light into polarized light.

Generally, the polarizer assembly includes a polarizer, compensation films or protection films disposed above and/or below the polarizer, and an adhesive layer to adhere the polarizer assembly to the LCD panel. However, the size of the polarizer may change or the polarizer assembly may exfoliate, i.e. separate, from the LCD panel after the polarizer assembly is attached to the LCD panel. The resulting light leakage may create a stain at a corner of the LCD panel.

### SUMMARY OF THE INVENTION

This invention provides adhesive that minimizes a corner stain in an LCD panel and provides more uniform brightness, an LCD device, and a polarizer assembly having the same.

Additional aspects and/or advantages of the present invention will be set forth in part in the description which follows and, in part, will be obvious from the description, or may be learned by practice of the present invention.

The present invention discloses an LCD device including an LCD panel, a polarizer assembly including a polarizer and a compensation film, and an adhesive layer adhering the polarizer assembly to the LCD panel. The adhesive layer has an exfoliation force of 16 N/25mm to 28 N/25mm.

The present invention also discloses an adhesive including an acryl polymer and a crosslinking agent. The adhesive has an exfoliation force of 16 N/25mm to 28 N/25mm.

The present invention also discloses a polarizer assembly including a polarizer, a compensation film adhered to a surface of the polarizer, and an adhesive layer arranged on the compensation film. The adhesive layer includes acryl polymer and a crosslinking agent. The adhesive layer has an exfoliation force of 16 N/25mm to 28 N/25mm.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.
FIG. 1 is an exploded perspective view of an LCD device according to an exemplary embodiment of the present invention.
FIG. 2 illustrates a cross-section of a polarizer assembly according to an exemplary embodiment of the present invention.
FIG. 3 illustrates a polarizing axis of the polarizer assembly according to an exemplary embodiment of the present invention.
FIG. 4 is a graph illustrating corner stain for various adhesives and compensation films.
FIG. 5 illustrates regions in which a corner stain is quantified according to an exemplary embodiment of the present invention.
FIG. 6A, FIG. 6B, FIG. 6C, FIG. 6D, and FIG. 6E illustrate corner stain in LCD panels using various adhesives.
FIG. 7 is a graph illustrating corner stain versus exfoliation force of the adhesive according to an exemplary embodiment of the present invention.

### DETAILED DESCRIPTION OF THE ILLUSTRATED EMBODIMENTS

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements.

It will be understood that when an element or layer is referred to as being "on" or "connected to" another element or layer, it can be directly on or directly connected to the other element or layer, or intervening elements or layers may be present. In contrast, when an element is referred to as being "directly on" or "directly connected to" another element or layer, there are no intervening elements or layers present.

Hereinafter, exemplary embodiments of the present invention will be described with reference to accompanying drawings.

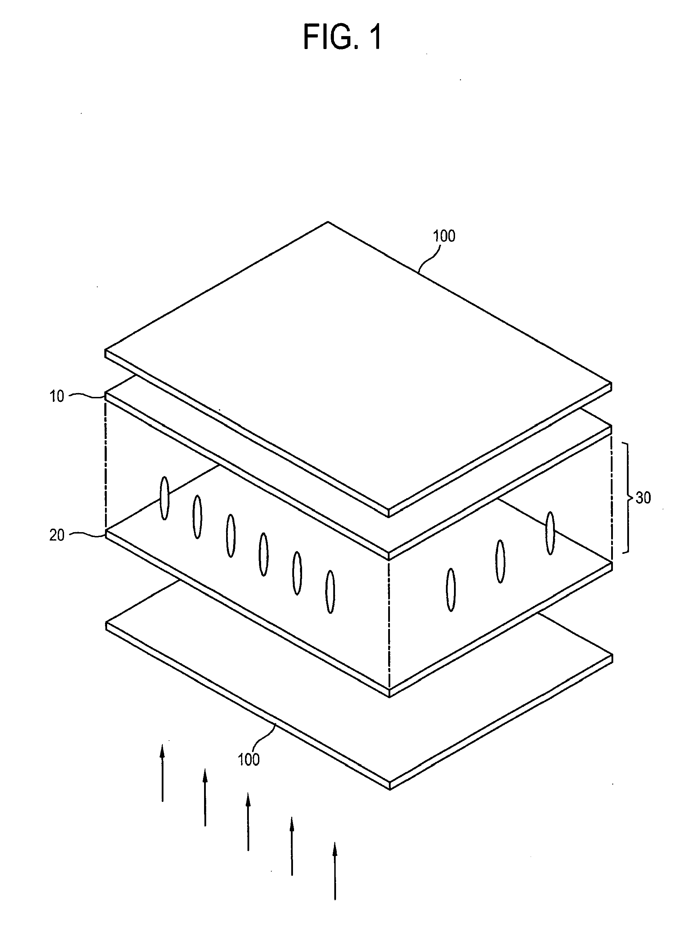

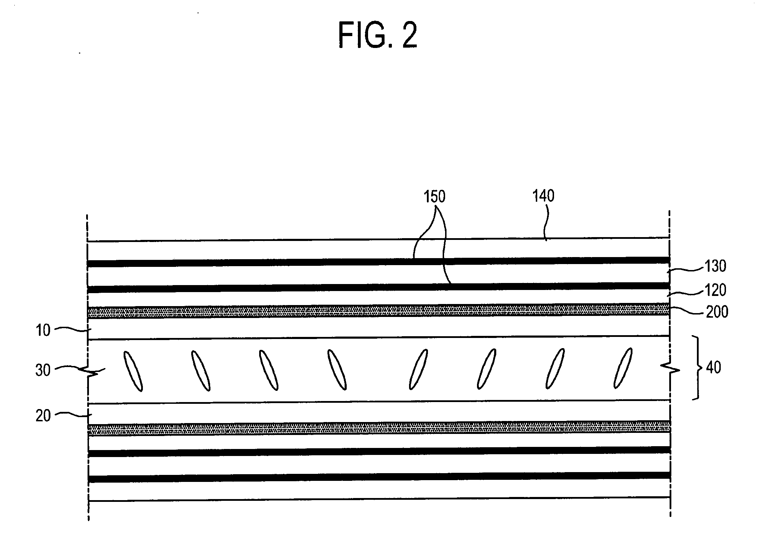

FIG. 1 is an exploded perspective view of an LCD device according to an exemplary embodiment of the present invention. FIG. 2 illustrates a cross-section of a polarizer assembly according to an exemplary embodiment of the present invention.

Referring to FIG. 1 and FIG. 2, an LCD device according to an exemplary embodiment of the present invention includes an LCD panel 40 having a first substrate 10, a second substrate 20 and a liquid crystal layer 30 arranged between the first substrate 10 and the second substrate 20, and two polarizer assemblies 100 arranged on opposite surfaces of the LCD panel 40 to polarize light emitted from the backlight assembly (not shown).

A thin film transistor (not shown) is arranged on the second substrate 20 to supply a voltage to a pixel and generate an electric field across the liquid crystal layer 30. The second substrate 20 is adjacent to a backlight assembly (not shown). A color filter layer (not shown) may be arranged in the first substrate 10 or the second substrate 20 to filter light and generate a color image.

As shown in FIG. 2, the polarizer assembly 100 adhered to the first substrate 10 includes a polarizer 130, a first compensation film 120 arranged on a first surface of the polarizer 130, a second compensation film 140 arranged on a second surface of the polarizer 130, a first bonding layer 150 to adhere the polarizer 130 to the first compensation film 120, and a second bonding layer 150 to adhere the polarizer 130 to the second compensation film 140. An adhesive layer 200 is arranged between the polarizer assembly 100 and the first substrate 10 to adhere the polarizer assembly 100 to the first substrate 10. The polarizer assembly 100 adhered to the second substrate 20 may have the same arrangement of components as the polarizer assembly 100 adhered to the first substrate 10.

Transmission axes, which may be referred to as polarizing axes, of the two polarizers 130 in the two polarizer assemblies 100 are arranged perpendicular to each other. The polarizers 130 are shaped like a rectangular plate. The polarizers 130 pass light that vibrates in the same direction as the transmission axes and absorb light vibrating in other directions. That is, each polarizer 130 may polarize unpolarized light vibrating in various directions into polarized light vibrating in one direction. The polarizers 130 may include poly vinyl alcohol (PVA), and diachronic material such as I₂ and Cl₂ that polarizes light in a particular direction within PVA. The transmission axes of the polarizers 130 are determined by arrangement and size of the diachronic materials within PVA.

The polarizers 130 may deteriorate upon contact with moisture. Thus, a waterproof agent may be applied along ends of the polarizers 130 to minimize the infiltration of moisture.

The first compensation film 120 is arranged on a first surface of the polarizer 130 and may have the same machine direction as the polarizing axis of the polarizer 130. Generally, a liquid crystal of a LCD device has birefringence property in which a long axis and a short axis of liquid crystal molecules have different refractive indexes. The length of optical path of the polarized light within the liquid crystal varies according to viewing angle. Thus, the phase difference of light, which is determined by the birefringence property of liquid crystal molecules, and the optical path of the light in the liquid crystal varies from a front view to a lateral view. Problems such as contrast ratio difference, color shift, and gray inversion may arise according to a viewing angle of the LCD device due to the phase difference of the light.

Therefore, the first compensation film 120 is arranged on the first surface of the polarizer 130 and may compensate for the phase difference of the light passing through the liquid crystal molecules in an opposite direction, thereby reducing the viewing angle problem. That is, the first compensation film 120 may include a phase difference film that changes a phase of light. Various compensation films may be used as the first compensation film 120 according to a mode of the liquid crystal. For example, if the liquid crystal has a twisted nematic (TN) mode, a c-plate may be used since a c-plate has the same refractive index on the same surface but has a different refractive index in a direction perpendicular to the surface (Nx=Ny>Nz or Nz<Nx=Ny where N is a refractive index, x and y are orthogonal directions in-plane on the surface, and z is orthogonally out of plane). If the liquid crystal has a vertical alignment (VA) mode, the c-plate and an a-plate may be used. The a-plate has different refractive indices on the same surface, but has a refractive index in a direction perpendicular to the surface that is the same as the refractive index in one direction on the surface (Nx=Nz>Ny or Ny=Nz>Nx where N is a refractive index, x and y are orthogonal directions in-plane on the surface, and z is orthogonally out of plane).

The first compensation film 120 according to the present exemplary embodiment may include triaceltyl cellulose (TAC), an n-TAC formed by deforming TAC, or an Arton film. The first compensation film 120 may include poly carbonate, poly carbonate copolymer, polyethylene, polypropylene, polynorbornene, poly vinyl chloride, or polystyrene.

The second compensation film 140 supports and protects the polarizer 130, and may include the same material as the first compensation film 120.

According to another exemplary embodiment, a polarizer protecting film (not shown) may be arranged on the second compensation film 140. The polarizer protecting film prevents the second compensation film 140 from being damaged, contaminated, or scratched. The polarizer protection film may include a transparent synthetic resin. For example, the polarizer protecting film may include a poly vinyl (PV) film, a low density polyester film, or a polyethylene terephthalate film. Alternatively, a surface of the second compensation film 140 may be treated instead of providing the polarizer protecting film thereon.

Bonding layers 150 are arranged between the first compensation film 120 and the polarizer 130, and between the polarizer 130 and the second compensation film 140 to adhere the first compensation film 120 and the second compensation film 140 to the polarizer 130. According to anther exemplary embodiment, the bonding layers 150 may not be provided depending on a manufacturing method of the polarizers 130, the first compensation film 120, and the second compensation film 140. For example, if the polarizers 130, the first compensation film 120, and the second compensation film 140 are laminated by a roll-to-roll method, the bonding layers 150 may be omitted.

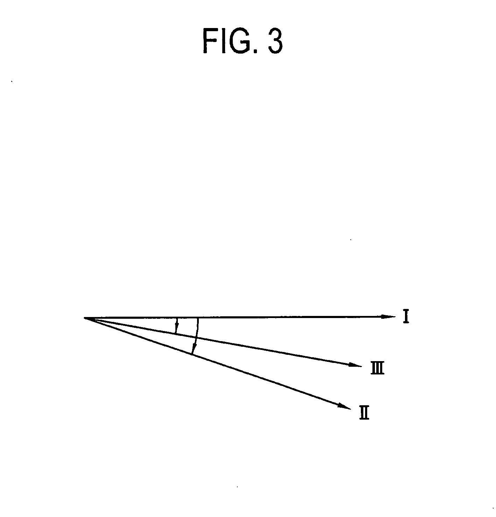

FIG. 3 illustrates a polarizing axis of the polarizer assembly according to an exemplary embodiment of the present invention.

More specifically, FIG. 3 illustrates a change in the polarizing axis of the polarizer assembly 100, which may occur when the polarizer assembly 100 is attached to the first substrate 10 or the second substrate 20. Initially, the polarizing axis of the polarizers 130 and the machine direction of the first compensation film 120 and the second compensation film 140 have the same first direction I. However, as the polarizer 130, the first compensation film 120, and the second compensation film 140 contract once the polarizer assembly 100 is attached to the first substrate 10 or the second substrate 20, the polarizing axis may be distorted to a second direction III and the machine direction of the first compensation film 120 and the second compensation film 140 compensation films 120 and 140 is distorted to a third direction II. Thus, the polarizing axis of the polarizers 130 and the machine direction of the first compensation film 120 and the second compensation film 140 are no longer aligned. The distorted optical axis may affect alignment of the liquid crystal, thereby causing light leakage. The polarizing axis becomes distorted more significantly near the corners of the LCD panel 40, thereby causing corner stain and non-uniform brightness across the LCD panel 40. As shown in FIG. 3, the polarizing axis III is distorted more than the machine direction II of the first compensation film 120 and the second compensation film 140.

The adhesive layers 200 are arranged between the first compensation film 120 and the first substrate 10, and between the first compensation film 120 the second substrate 20. The adhesive layer 200 may include a pressure sensitive adhesive (PSA) that is highly adhesive, thermostable, and waterproof. The adhesive layer 200 may include acryl polymer and a crosslinking agent. The monomer of acryl polymer may be selected from n-butyl acrylate, t-butyl acrylate, 2-ethyl hexyl acrylate, n-octyl acrylate, isononyl acrylate, acrylic acid, and methyl metal acrylate. The crosslinking agent may include two functional groups. The crosslinking agent may include a monomer having a carboxyl group such as acrylic acid, methacrylic acid, maleic acid, and itaconic acid, and a monomer having a hydroxyl group, acrylamid, methacrylamid, and glycidylamid.

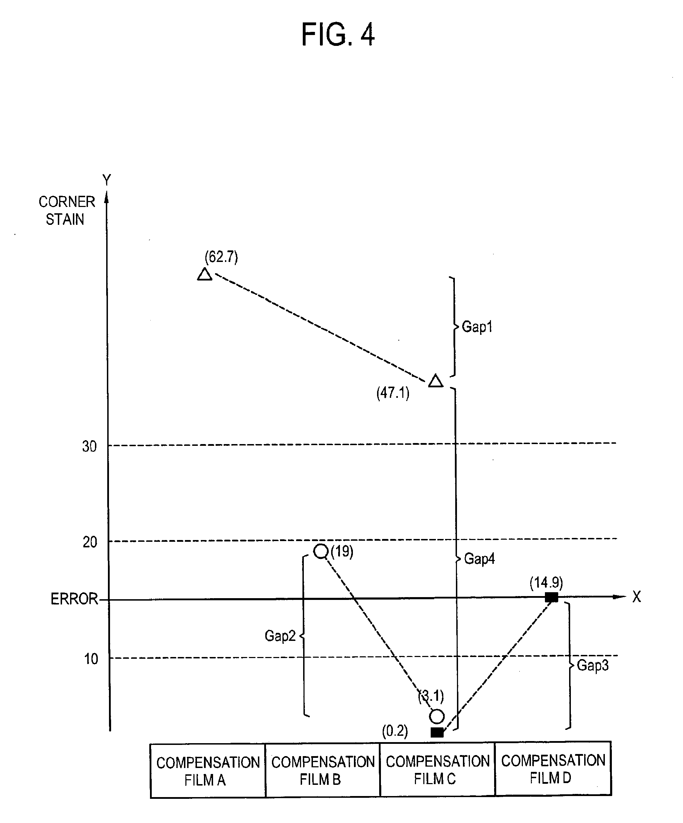

FIG. 4 is a graph illustrating corner stain for various adhesives and compensation films.

Referring to FIG. 4, the adhesive refers to a material forming the adhesive layer 200. An axis X in the graph presents different kinds of compensation films, and more specifically, four types of compensation films A, B, C and D corresponding to v-TAC, n-TAC, NEW n-TAC, and J-plate, respectively. An axis Y refers to the degree of the corner stain. A corner stain of 15 or above may indicate that an error has occurred in the LCD panel 40 due to the corner stain. Equivalent marks illustrate a polarizer assembly manufactured by the same manufacturer and using the same adhesive.

Compensation films A and C are used in a polarizer assembly manufactured by Manufacturer 1 and marked with A. The respective corner stains for compensation film A and compensation film C manufactured by Manufacturer 1 are 62.7 and 47.1, showing a corner stain gap of approximately 15 (Gap 1).

Compensation films B and C are used in a polarizer assembly manufactured by Manufacturer 2 and marked with o. The respective corner stains for compensation film B and compensation film C manufactured by Manufacturer 2 are 19 and 3.1. The corner stain gap between the two polarizer assemblies is approximately 16 (Gap 2).

Compensation films C and D are used in a polarizer assembly manufactured by Manufacturer C marked with □. The respective corner stains for compensation film C and compensation film D manufactured by Manufacturer 3 are 14.9 and 0.2, showing a corner stain gap of approximately 14 (Gap 3).

The corner stain gap ranges from about 14 to about 16 depending on the types of the compensation films. However, the corner stain gap resulting from the use of different adhesives may be much greater. For example, the corner stain gap between the polarizer assembly manufactured by Manufacturer 1 and the polarizer assembly manufactured by Manufacturer 2, both using the compensation film C but different adhesives is about 47 (Gap 4), which corresponds to approximately three times the corner stain difference (Gap 1, Gap 2, and Gap 3) of the polarizer assemblies manufactured by the same manufacturer but using different compensation films. In conclusion, the adhesive may have a greater effect on the corner stain than the type of compensation film. That is, the optical axis of the compensation films and the polarizer may become distorted by the adhesive used to adhere the polarizer assembly 100 to the LCD panel 40. Thus, the corner stain may be minimized by decreasing the influence of the adhesive 200.

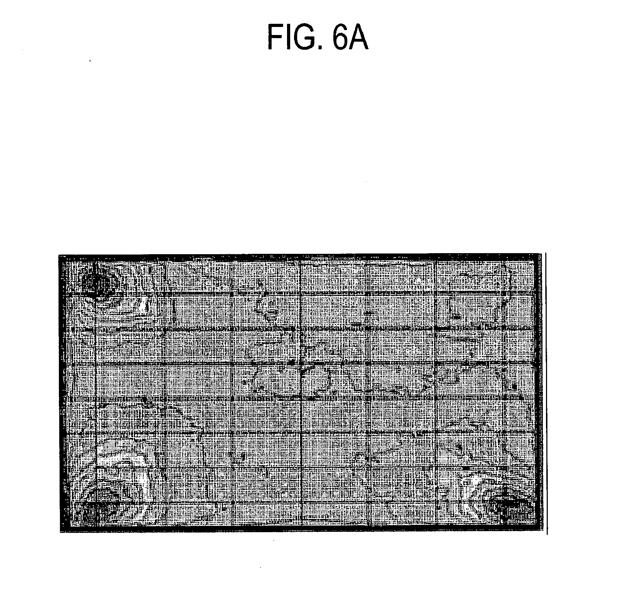

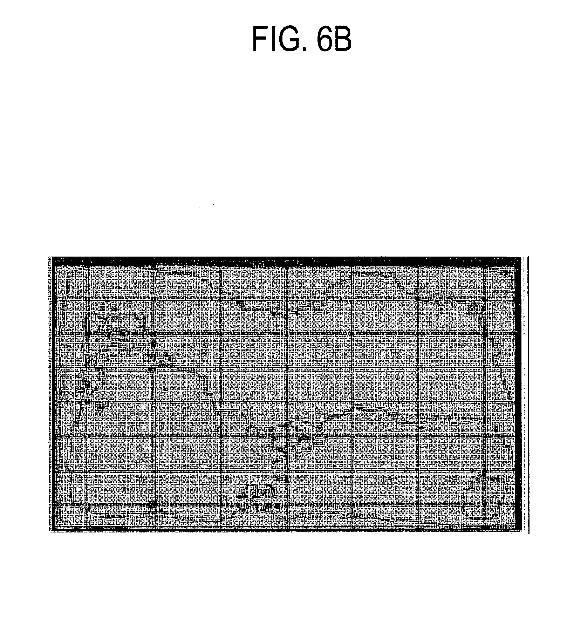

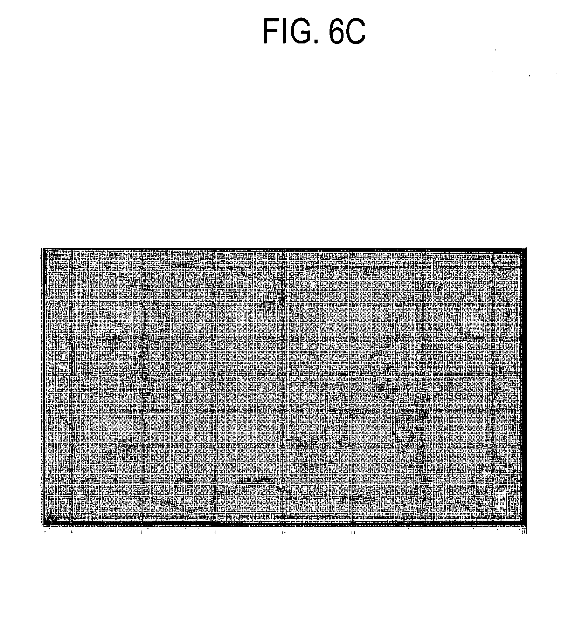

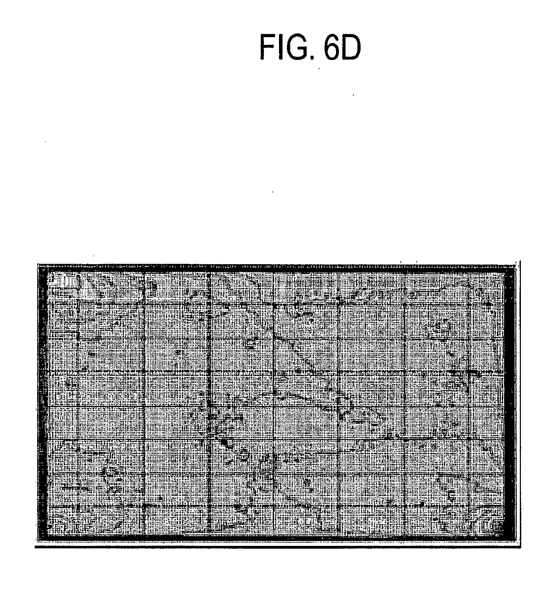

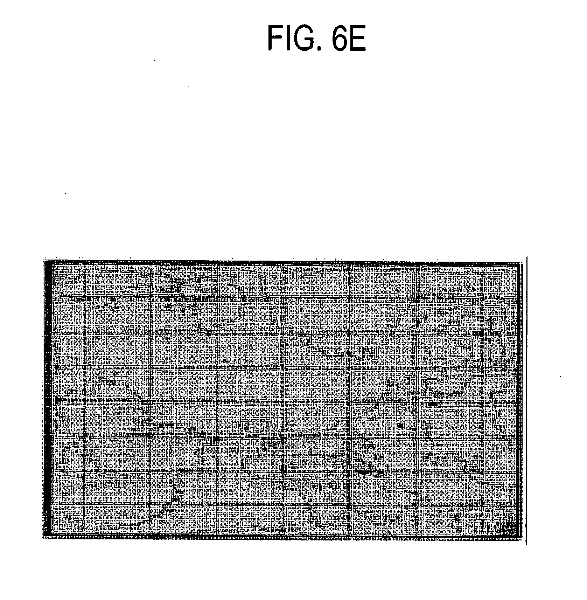

Table 1 shows various adhesives according to a weight ratio of acryl polymer to the crosslinking agent included in the adhesive. As described below, FIG. 6A, FIG. 6B, FIG. 6C, FIG. 6D, and FIG. 6E illustrate corner stain in LCD panels using various adhesives corresponding to the adhesives used in the Embodiments shown in Table 1.

**[Table 1]**

| | Corner stain | Exfoliation force (N/25mm) | Storage modulus (N/m) | Dry thickness (um) | Weight ratio of adhesive (%) | |
|---|---|---|---|---|---|---|
| | | | | | Acryl polymer | Crosslinking agent |
| Embodiment 1 | 20 | 30 | 1.9 | 25 | 90 | 10 |
| Embodiment 2 | 3 | 20 | 1.9 | 15 | 85 | 15 |
| Embodiment 3 | 40 | 11 | 1.0 | 15 | 80 | 20 |
| Embodiment 4 | 32 | 14 | 1.0 | 25 | 75 | 25 |
| Embodiment 5 | 43 | 11 | 0.8 | 20 | 70 | 30 |

The polarizer assemblies used in the foregoing embodiments were manufactured by Dongwoo Fine-Chem Co. Ltd, Korea. The adhesive has different ratios of acryl polymer and the crosslinking agent, but includes the same materials. The ratio of acryl polymer and the crosslinking agent is the weight ratio, and the dry thickness refers to a thickness once the adhesive layer with the corresponding weight ratio is dried. The storage modulus reflects viscoelasticity of the adhesives, and refers to a modulus of elasticity representing the distortion degree when the adhesive is stressed. The exfoliation force is the force, in Newtons (N), to exfoliate or separate the polarizer assembly 100 having a 25 mm width from the LCD panel 40.

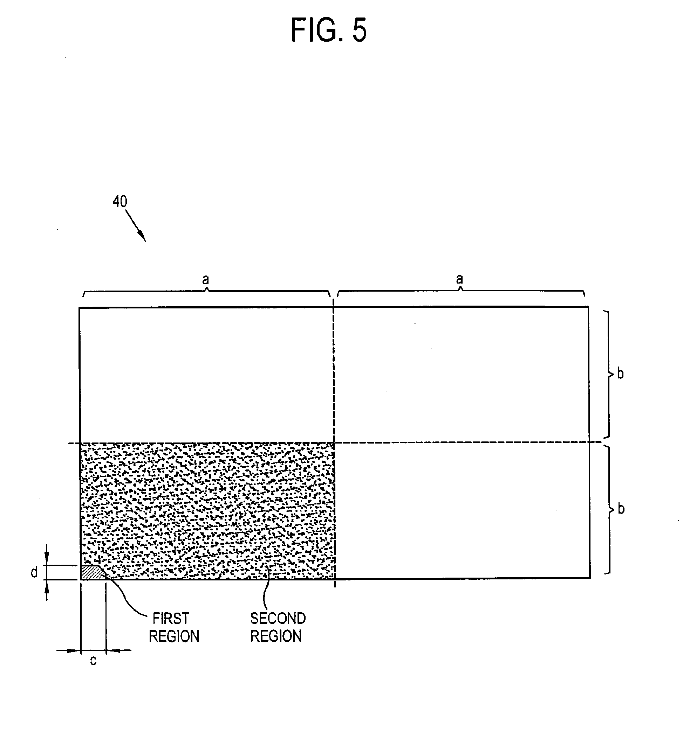

FIG. 5 illustrates regions in which a corner stain is quantified according to an exemplary embodiment of the present invention.

The corner stain is quantified as a ratio of brightness of light in a first region having the corner stain to brightness of light in a second region adjacent to the first region. FIG. 5 illustrates the first region and the second region. The second region includes about one-quarter of the LCD panel 40, excluding the first region. The first region has a polygonal shape which has a first side c corresponding to approximately 15 % of a length a, which is one-half of the length of the LCD panel 40, and a second side d corresponding to approximately 15 % of a length b, which is one-half of the width of the LCD panel 40. Since stain may be more concentrated in the corner, the shape of the first region may be rectangular or pentagonal according to the shape of the stain. The size of the first region may be selected or defined to acknowledge the brightness difference according to the corner stain. According to the present exemplary embodiment, the first region has a polygonal shape having sides with dimensions corresponding to approximately 15% of the longer side and shorter side of the second region including about one-quarter of the LCD panel 40, excluding the first region.

FIG. 6A, FIG. 6B, FIG. 6C, FIG. 6D, and FIG. 6E illustrate corner stain in LCD panels using various adhesives.

More specifically, FIG. 6A, FIG. 6B, FIG. 6C, FIG. 6D, and FIG. 6E illustrate corner stain in LCD panels 40 after the polarizer assembly 100 is attached to each LCD panel 40 and then stressed at approximately 70 °C. In FIG. 6A, FIG. 6B, FIG. 6C, FIG. 6D, and FIG. 6E, darker regions reflect higher brightness while light regions reflect lower brightness. In the LCD panel 40 according to exemplary embodiments except the second exemplary embodiment, brightness of the corner is higher than that in the center, thereby creating the corner stain. In the Embodiment 2 listed in Table 1, the weight ratio of the acryl polymer and the crosslinking agent was 85:15, and the exfoliation force was 20 N/25mm. As the weight ratio of the acryl polymer increases, the exfoliation force of the adhesive grows. However, the relation between the exfoliation force of the adhesive and the degree of the corner stain may not be consistently proportional.

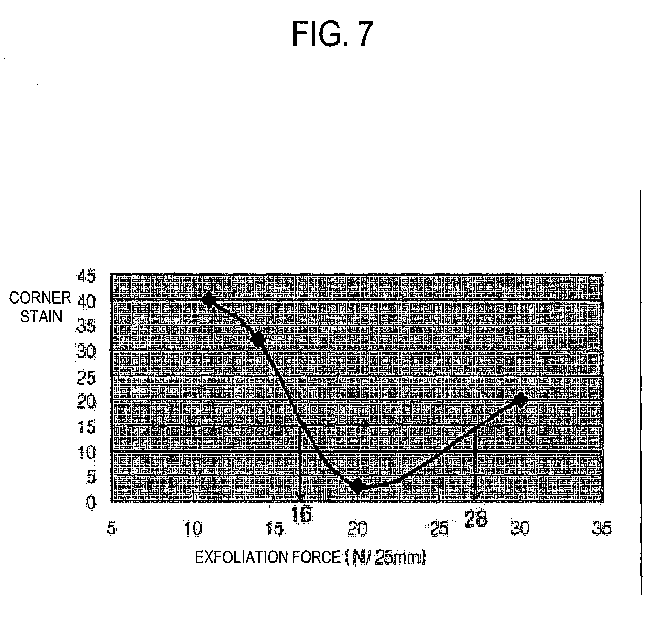

FIG. 7 is a graph illustrating corner stain versus exfoliation force of the adhesive according to an exemplary embodiment of the present invention. More specifically, FIG. 7 is a graph illustrating the quantified corner stain versus exfoliation force of the adhesive for the Embodiments listed in Table 1.

As shown in Table 1 and FIG. 6A, FIG. 6B, FIG. 6C, FIG. 6D, and FIG. 6E, the corner stain is affected more by the exfoliation force of the adhesive than by the dry thickness or the storage modulus. If the corner stain is approximately 14 and below, the LCD panel 40 may provide a more uniform brightness. The exfoliation force of the adhesive corresponding thereto is approximately 16 N/25mm to 28 N/25mm. That is, if the exfoliation force of the adhesive is approximately 16 N/25mm to 28 N/25mm, the corner stain may be reduced or avoided, as shown in FIG. 6B. As shown in Table 1, the weight ratio of the acryl polymer and the crosslinking agent used in the adhesive in Embodiment 2 is 85:15. Under such exfoliation force, the weight ratio of the acryl polymer and the crosslinking agent may be 75:25 to 90:10. The storage modulus of the adhesive is 1.5 N/m to 2.5 N/m, or 1.7 N/m to 2.0 N/m. As the dry thickness of the adhesive layer decreases, the polarizing axes of the polarizers 130 and the machine axes of the first compensation film 120 and the second compensation film 140 may become distorted. Thus, the dry thickness of the adhesive layer may be 10 µm to 20 µm.

That is, the corner stain of the LCD panel 40 is caused by the distorted polarizing axes of the polarizers 130 and the machine axes of the first compensation film 120 and the second compensation film 140. The distortion of the polarizing axis is affected by the exfoliation force of the adhesive. In exemplary embodiments of the present invention, the exfoliation force of the adhesive layer used in the polarizer assembly 100 may be 16 N/25mm to 28 N/25mm to decrease the distortion of the polarizing axis due to the adhesive. Such exfoliation force may be realized by controlling the weight ratio of the acryl polymer and the crosslinking agent included in the adhesive layer. According to exemplary embodiments of the present invention, the weight ratio of the acryl polymer and the crosslinking agent is 75:25 to 90:10, or about 85:15.

As described above, exemplary embodiments of the present invention provide a LCD device which reduces corner stain and provides more uniform brightness.
It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.

## Claims

1. A liquid crystal display (LCD) device, comprising:
a LCD panel;
a polarizer assembly comprising a polarizer and a compensation film; and
an adhesive layer adhering the polarizer assembly to the LCD panel, the adhesive layer having an exfoliation force of 16 N/25mm to 28 N/25mm.

2. The LCD device of claim 1, wherein the adhesive layer comprises a pressure sensitive adhesive (PSA).

3. The LCD device of claim 2, wherein the PSA comprises acryl polymer and a crosslinking agent, and a weight ratio of the acryl polymer to the crosslinking agent is 75:25 to 90:10.

4. The LCD device of claim 2, wherein a storage modulus of the adhesive layer is 1.5 N/m to 2.5 N/m.

5. The LCD device of claim 2, wherein a dry thickness of the adhesive layer is 10 µm to 20 µm.

6. The LCD device of claim 1, wherein the compensation film comprises a first compensation film adhered to a first surface of the polarizer and a second compensation film adhered to a second surface of the polarizer.

7. An adhesive, comprising:
an acryl polymer; and
a crosslinking agent,
wherein the adhesive has an exfoliation force of 16 N/25mm to 28 N/25mm.

8. The adhesive of claim 7, wherein a weight ratio of the acryl polymer to the crosslinking agent is 75:25 to 90:10.

9. The adhesive of claim 7, wherein a storage modulus of the adhesive is 1.5 N/m to 2.5 N/m.

10. A polarizer assembly, comprising:
a polarizer;
a compensation film adhered to a surface of the polarizer; and
an adhesive layer arranged on the compensation film, the adhesive layer comprising acryl polymer and a crosslinking agent,
wherein the adhesive layer has an exfoliation force of 16 N/25mm to 28 N/25mm.

11. The polarizer assembly of claim 10, wherein the adhesive layer is a pressure sensitive adhesive (PSA).

12. The polarizer assembly of claim 11, wherein a weight ratio of the acryl polymer to the crosslinking agent is 75:25 to 90:10.

13. The polarizer assembly of claim 11, wherein a storage modulus of the adhesive layer is 1.5 N/m to 2.5 N/m.

14. The polarizer assembly of claim 11, wherein a dry thickness of the adhesive layer is 10 µm to 20 µm.
